(19) Europäisches Patentamt
European Patent Office
Office européen des brevets

(11) **EP 3 464 412 B1**

(12) **EUROPÄISCHE PATENTSCHRIFT**

(45) Veröffentlichungstag und Bekanntmachung des Hinweises auf die Patenterteilung:
**27.11.2024 Patentblatt 2024/48**

(21) Anmeldenummer: **17730407.8**

(22) Anmeldetag: **30.05.2017**

(51) Internationale Patentklassifikation (IPC):
**B32B 27/40** (2006.01)  **C08G 18/48** (2006.01)
**C08G 18/76** (2006.01)  **B32B 5/20** (2006.01)
**B32B 7/04** (2019.01)  **B32B 13/02** (2006.01)

(52) Gemeinsame Patentklassifikation (CPC):
**B29C 39/126; B29C 44/1228; B29C 44/129;**
**B29C 44/3442; B32B 5/20; B32B 7/04;**
**B32B 13/02; B32B 13/045; B32B 27/40;**
**C08G 18/48; C08G 18/7664;** B29K 2075/00;
B29K 2105/04; B29K 2275/00; B29K 2475/00;

(Forts.)

(86) Internationale Anmeldenummer:
**PCT/EP2017/062983**

(87) Internationale Veröffentlichungsnummer:
**WO 2017/207536 (07.12.2017 Gazette 2017/49)**

(54) **VERFAHREN ZUR HERSTELLUNG VON SANDWICH-BAUELEMENTEN**

METHOD FOR THE PREPARATION OF SANDWICH COMPONENTS

PROCEDE DESTINE A LA FABRICATION DE COMPOSANTS EN SANDWICH

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.05.2016 EP 16172046**

(43) Veröffentlichungstag der Anmeldung:
**10.04.2019 Patentblatt 2019/15**

(73) Patentinhaber:
• **BASF SE**
**67056 Ludwigshafen am Rhein (DE)**
• **Sika Technology AG**
**6340 Baar (CH)**

(72) Erfinder:
• **MOENNIG, Sven**
**68199 Mannheim (DE)**
• **TURCINSKAS, Sarunas**
**83308 Trostberg (DE)**
• **WEINRICH, Dirk**
**49448 Lemförde (DE)**
• **EISENHARDT, Andrea**
**49448 Lemförde (DE)**
• **RENNER, Christian**
**49448 Lemförde (DE)**
• **BOKERN, Jürgen**
**68199 Mannheim (DE)**
• **POPOV, Alex**
**49448 Lemfoerde (DE)**
• **TOMASI, Gianpaolo**
**49448 Lemförde (DE)**

(74) Vertreter: **BASF IP Association**
**BASF SE**
**GBI-C006**
**67056 Ludwigshafen (DE)**

(56) Entgegenhaltungen:
• **ALI SHAMS ET AL: "Innovative sandwich structures made of high performance concrete and foamed polyurethane", COMPOSITE STRUCTURES, vol. 121, 1 March 2015 (2015-03-01), GB, pages 271 - 279, XP055324177, ISSN: 0263-8223, DOI: 10.1016/j.compstruct.2014.11.026**

(52) Gemeinsame Patentklassifikation (CPC): (Forts.)
B29K 2675/00; B29K 2875/00; B29K 2995/0015;
B29K 2995/0046; B29K 2995/0063; B32B 2250/03;
B32B 2250/40; B32B 2255/00; B32B 2255/26;
B32B 2262/02; B32B 2262/103; B32B 2266/0278;
B32B 2307/21; B32B 2307/302; B32B 2307/304;
B32B 2307/3065; B32B 2307/308; B32B 2307/50;
B32B 2307/54; B32B 2307/706; B32B 2307/7145;
B32B 2307/718; B32B 2307/72; B32B 2307/732;
B32B 2419/04; B32B 2419/06; C08G 2110/0025

**Beschreibung**

Die Erfindung betrifft ein Verfahren zur Herstellung von Sandwich-Bauelementen aus mindestens zwei voneinander beabstandeten Baustoffplatten mit einem zwischen den Baustoffplatten angeordneten Polyurethan-Schaumkern sowie die nach dem Verfahren erhältlichen Sandwich-Bauelemente.

Sandwich-Bauelemente aus mindestens zwei voneinander beabstandeten Baustoffplatten, z. B. Betonplatten, mit einem dazwischenliegenden Schaumkern, der als Dämmschicht wirkt, sind bekannt. So beschreiben die WO 00/15685 und WO 2009/077490 ein Bauelement mit einem Polyurethan-Hartschaum als Dämmschicht. Mit derartigen Sandwich-Konstruktionen wird versucht, den Anforderungen an moderne Gebäudehüllen hinsichtlich Tragfähigkeit, Wärmedämmung, Dauerhaftigkeit und Nachhaltigkeit gerecht zu werden. Zur Herstellung der Sandwich-Bauelemente werden vorgefertigte Hartschaumplatten aus Polyurethan verwendet, die zwischen die Baustoffplatten von Hand eingelegt werden oder die Schaumkerne werden zwischen die Betonplatten eingeschäumt, wobei das Einschäumen durch Gießen erfolgt, siehe Bauingenieur 88, 412-419 und Composite Structures 121 (2015) 271-279. Außerdem ist bekannt, die Polyurethanplatten mit einer auflaminierten Aluminiumfolie zu kaschieren. Auf diese Weise können die Polyurethanplatten diffusionsdicht und alterungsbeständiger gemacht werden.

Ali Shams et al. in Composite Structures 121 (2015) 271-279 offenbaren die Herstellung von Sandwichelementen, wobei zwischen zwei in einer Form fixierte Betonplatten flüssiges Polyurethan-Material gegossen wird, die Form verschlossen und der Schaum gehärtet wird.

Die Schaumkerne der bekannten Sandwich-Bauelemente weisen unvermeidliche Anisotropie auf, d.h. die mechanischen Eigenschaften variieren mit der Orientierung des Schaums. Diese Anisotropie resultiert unmittelbar aus dem Herstellungsverfahren der Schaumkerne. Meist weisen die Schäume in der Hauptausdehnungsrichtung (Steigrichtung) des Schaums andere mechanische Eigenschaften auf als in einer Richtung senkrecht dazu. Die Zellen wachsen in Steigrichtung anders als quer zur Steigrichtung. Um einheitliche mechanische Eigenschaften unabhängig von der Orientierung zu erhalten, sind Schaumkerne mit geringer Anisotropie wünschenswert. Eine übermäßige Anisotropie des Schaumkerns kann auch die Wärmeisolationseigenschaften des Sandwich-Bauelements beeinträchtigen.

Die Fertigungszeiten der nach Stand der Technik hergestellten Sandwich-Bauelemente sind für eine effektive industrielle Fertigung zu hoch. Da die Fertigungsdauer bis zur Herstellung der Dämmung deutlich oberhalb der Taktzeit zur Herstellung der Sandwichelemente selber liegt, ist es nach dem Stand der Technik erforderlich, die Dämmung als Verfahrensschritt außerhalb der Taktfertigung der Sandwichelemente durchzuführen, was die Herstellung unwirtschaftlich macht. Außerdem kommt es auf Grund der Druckentwicklung beim Ausschäumen zur Bildung von Rissen in den (sprödbrüchigen) Baustoffplatten, was zu einer verringerten Dauerhaftigkeit und verringerten Haftzugfestigkeit des Schaumes an der Baustoffplatte und einer erhöhten Ausdiffusion des Zellgases aus dem Schaum führt. Die Folge davon ist eine verringerte Dämmwirkung der Sandwich-Bauelemente.

Der vorliegenden Erfindung liegt daher die Aufgabe zugrunde, Sandwich-Bauelemente, deren Schaumkern verringerte Anisotropie bei guten Dämmwerten aufweist, sowie ein Verfahren zur Herstellung der Sandwich-Bauelemente zur Verfügung zu stellen, das mit schneller Fertigungszeit durchführbar ist.

Diese Aufgabe wird gelöst durch ein Sandwich-Bauelement aus mindestens zwei voneinander beabstandeten, im wesentlichen parallel zueinander angeordneten Baustoffplatten mit einem Polyurethan-Schaumkern zwischen den beabstandeten Baustoffplatten, wobei das Verhältnis des höchsten gemessenen Druck-E-Moduls (gemäß DIN EN ISO 844) des Polyurethan-Schaumkerns in einer Raumrichtung, die parallel zu den Baustoffplatten orientiert ist, zum Druck-E-Modul des Polyurethan-Schaumkerns in einer Raumrichtung, die senkrecht zu den Baustoffplatten orientiert ist, weniger als 1,7, vorzugsweise weniger als 1,5, beträgt, und der Schaumstoffkern erhältlich ist durch Verdichtung des Schaums im Bereich von 1,1 bis 2,5, wobei die Verdichtung der Quotient aus der Dichte des Schaumes im Hohlraum dividiert durch die Dichte des frei geschäumten Schaumkörpers ist.

Vorzugsweise liegt die Kerndichte des Polyurethan-Schaumkerns im Bereich von 20 bis 100 kg/m$^3$, insbesondere 20 bis 80 kg/m$^3$ und besonders bevorzugt 30 bis 60 kg/m$^3$ oder 30 bis 50 kg/m$^3$. Dabei wird die Kerndichte (in kg/m$^3$) unter Verwendung eines Würfels von etwa 5 cm Kantenlänge aus dem Mittelteil des Schaums gemessen.

Diese Aufgabe wird weiterhin gelöst durch ein Verfahren zur Herstellung von Sandwich-Bauelementen aus mindestens zwei voneinander beabstandeten Baustoffplatten mit einem Polyurethan-Schaumkern, umfassend folgende Schritte:

A) Vermischen von (a) mindestens einer Polyisocyanatkomponente, (b) mindestens einer Komponente, die mindestens eine mehrfunktionelle gegenüber Isocyanaten reaktive Verbindung umfasst, und (c) einem Treibmittel nach dem Hochdruckinjektionsverfahren;

B) Einbringen des erhaltenen Gemisches in einen Hohlraum zwischen den beabstandeten Baustoffplatten, wobei die Verdichtung des Schaums im Bereich von 1,1 bis 2,5 liegt, wobei die Verdichtung der Quotient aus der Dichte des Schaums im Hohlraum dividiert durch die Dichte des frei geschäumten Schaumkörpers ist.

Es wurde gefunden, dass die nach dem Hochdruckinjektionsverfahren mit definierter Verdichtung hergestellten Schaumkerne bei guten Dämmwerten eine geringere Anisotropie aufweisen als frei geschäumte Schaumkerne. Konstruktionsbedingt sind bei den Sandwich-Bauelementen die mechanischen Eigenschaften in Richtung der Dicke, d. h. in einer Raumrichtung, die senkrecht zu den Baustoffplatten orientiert ist, besonders wichtig. Bei den erfindungsgemäßen Sandwich-Bauelementen beträgt das Verhältnis des höchsten gemessenen Druck-E-Moduls des Polyurethan-Schaumkerns in einer Raumrichtung, die parallel zu den Baustoffplatten orientiert ist, zum Druck-E-Modul des Polyurethan-Schaumkerns in einer Raumrichtung, die senkrecht zu den Baustoffplatten orientiert ist, weniger als 1,7, vorzugsweise weniger als 1,5. Vorzugsweise beträgt das Verhältnis des höchsten gemessenen Druck-E-Moduls des Polyurethan-Schaumkerns in einer Raumrichtung, die parallel zu den Baustoffplatten orientiert ist, zum Druck-E-Modul des Polyurethan-Schaumkerns in einer Raumrichtung, die senkrecht zu den Baustoffplatten orientiert ist, von 0,58 bis weniger als 1,7, insbesondere von 0,66 bis weniger als 1,5. Typischerweise ist die Raumrichtung, in der der höchste Druck-E-Modul des Polyurethan-Schaumkerns gemessen wird, parallel zur Steigrichtung des Schaums bei der Herstellung.

Prozentangaben sind so zu verstehen, dass die Summe aller Prozentangaben der Bestandteile einer Formulierung 100% ergibt. Soweit nicht anders angegeben, sind alle Prozentangaben auf das Gesamtgewicht einer Formulierung bezogen. Die folgenden Ausführungen beziehen sich sowohl auf erfindungsgemäße Sandwich-Bauelemente als auch auf das erfindungsgemäße Herstellungsverfahren, soweit aus dem Kontext nicht anders ersichtlich.

Schritt A):

In Schritt A) wird eine Polyisocyanatkomponente (a), die mindestens ein Polyisocyanat (a1) umfasst, mit einer Komponente (b) vermischt, die mindestens eine mehrfunktionelle gegenüber Isocyanaten reaktive Verbindung (b1) umfasst, um die Bildung eines Polyurethans zu bewirken. Unter Polyisocyanat (a1) wird im Rahmen der vorliegenden Erfindung eine organische Verbindung verstanden, welche mindestens zwei reaktive Isocyanatgruppen pro Molekül enthält, d. h. die Funktionalität beträgt mindestens 2. Sofern die eingesetzten Polyisocyanate oder ein Gemisch mehrerer Polyisocyanate keine einheitliche Funktionalität aufweisen, so beträgt der gewichtsmittlere Mittelwert der Funktionalität der eingesetzten Komponente (a1) mindestens 2.

Als Polyisocyanate (a1) kommen die an sich bekannten aliphatischen, cycloaliphatischen, araliphatischen und vorzugsweise die aromatischen mehrwertigen Isocyanate in Betracht. Derartige mehrfunktionelle Isocyanate sind an sich bekannt oder können nach an sich bekannten Methoden hergestellt werden. Die mehrfunktionellen Isocyanate können insbesondere auch als Mischungen eingesetzt werden, so dass die Komponente a) in diesem Fall verschiedene mehrfunktionelle Isocyanate enthält. Als Polyisocyanat in Betracht kommende mehrfunktionelle Isocyanate weisen zwei (im folgenden Diisocyanate genannt) oder mehr als zwei Isocyanatgruppen pro Molekül auf.

Im Einzelnen seien insbesondere genannt: Alkylendiisocyanate mit 4 bis 12 Kohlenstoffatomen im Alkylenrest, wie 1,12-Dodecandiioscyanat, Tetramethylen-1,4-diisocyanat, 2-Ethyltetramethylen-1,4-diisocyanat, Pentamethylen-1,5-diisocyanat, 2-Methylpentamethylen-1,5-diisocyanat und vorzugsweise Hexamethylendiisocyanat-1,6; cycloaliphatische Diisocyanate wie Cyclohexan-1,3- und 1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Polyisocyanate, wie 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten.

Insbesondere geeignet sind 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyldiphenyldiisocyanat, 1,2-Diphenylethandiisocyanat und/oder p-Phenylen-diisocyanat (PPDI), Tri-, Tetra-, Penta-, Hexa-, Hepta- und/oder Octamethylendiisocyanat, 2-Methylpenta-methylen-1,5-diisocyanat, 2-Ethylbutylen-1,4-diisocyanat, Pentamethylen-1,5-diisocyanat, Butylen-1,4-diisocyanat, 1-Isocyanato-3,3,5-trimethyl-5-iso-cyanatomethyl-cyclohexan (Isophorondiisocyanat, IPDI), 1,4- und/oder 1,3-Bis(isocyanatomethyl)cyclohexan (HXDI), 1,4-Cyclohexandiisocyanat, 1-Methyl-2,4- und/oder-2,6-cyclohexandiisocyanat und 4,4'-, 2,4'- und/oder 2,2'-Dicyclohexylmethandiisocyanat.

Häufig werden auch modifizierte Polyisocyanate, d. h. Produkte, die durch chemische Umsetzung organischer Polyisocyanate erhalten werden und die mindestens zwei reaktive Isocyanatgruppen pro Molekül aufweisen, verwendet. Insbesondere genannt seien Ester-, Harnstoff-, Biuret-, Allophanat-, Carbodiimid-, Isocyanurat-, Uretdion-, Carbamat- und/oder Urethangruppen enthaltende Polyisocyanate.

Besonders bevorzugt sind als Polyisocyanate (a1) der Komponente a) folgende Ausführungsformen:

i) Mehrfunktionelle Isocyanate auf Basis von Toluylendiisocyanat (TDI), insbesondere 2,4-TDI oder 2,6-TDI oder Mischungen aus 2,4- und 2,6-TDI;

4

ii) Mehrfunktionelle Isocyanate auf Basis von Diphenylmethandiisocyanat (MDI), insbesondere 2,2'-MDI oder 2,4'-MDI oder 4,4'-MDI oder oligomeres MDI, das auch als Polyphenylpolymethylenisocyanat bezeichnet wird, oder Mischungen aus zwei oder drei der vorgenannten Diphenylmethandiisocyanate, oder Roh-MDI, welches bei der Herstellung von MDI anfällt, oder Mischungen aus mindestens einem Oligomer des MDI und mindestens einem der vorgenannten niedermolekularen MDI-Derivate;

iii) Gemische aus mindestens einem aromatischen Isocyanat gemäß Ausführungsform i) und mindestens einem aromatischen Isocyanat gemäß Ausführungsform ii).

Als Polyisocyanat ganz besonders bevorzugt ist polymeres Diphenylmethandiisocyanat. Bei polymerem Diphenylmethandiisocyanat (im Folgenden polymeres MDI genannt) handelt es sich um ein Gemisch aus zweikernigem MDI und oligomeren Kondensationsprodukten und somit Derivaten von Diphenylmethandiisocyanat (MDI). Die Polyisocyanate können bevorzugt auch aus Mischungen von monomeren aromatischen Diisocyanaten und polymerem MDI aufgebaut sein.

Polymeres MDI enthält neben zweikernigem MDI ein oder mehrere mehrkernige Kondensationsprodukte des MDI mit einer Funktionalität von mehr als 2, insbesondere 3 oder 4 oder 5. Polymeres MDI ist bekannt und wird häufig als Polyphenylpolymethylenisocyanat oder auch als oligomeres MDI bezeichnet. Polymeres MDI ist üblicherweise aus einer Mischung aus MDI-basierten Isocyanaten mit unterschiedlicher Funktionalität aufgebaut. Üblicherweise wird polymeres MDI im Gemisch mit monomerem MDI eingesetzt.

Die (gewichtsmittlere) Funktionalität eines Polyisocyanates, welches polymeres MDI enthält, kann im Bereich von ungefähr 2,2 bis ungefähr 5 variieren, insbesondere von 2,3 bis 4, insbesondere von 2,4 bis 3,5. Eine solche Mischung von MDI-basierten mehrfunktionellen Isocyanaten mit unterschiedlichen Funktionalitäten ist insbesondere das Roh-MDI, das bei der Herstellung von MDI als Zwischenprodukt erhalten wird.

Mehrfunktionelle Isocyanate oder Mischungen mehrerer mehrfunktioneller Isocyanate auf Basis von MDI sind bekannt und werden beispielsweise von BASF Polyurethanes GmbH unter dem Namen Lupranat® vertrieben.

Vorzugsweise beträgt die Funktionalität des Polyisocyanats (a1) mindestens zwei, insbesondere mindestens 2,2 und besonders bevorzugt mindestens 2,4. Die Funktionalität beträgt bevorzugt von 2,2 bis 4 und besonders bevorzugt von 2,4 bis 3.

Vorzugsweise beträgt der Gehalt an Isocyanatgruppen des Polyisocyanats (a1) von 5 bis 10 mmol/g, insbesondere von 6 bis 9 mmol/g, besonders bevorzugt von 7 bis 8,5 mmol/g. Dem Fachmann ist bekannt, dass der Gehalt an Isocyanatgruppen in mmol/g und das sogenannte Äquivalenzgewicht in g/Äquivalent in einem reziproken Verhältnis stehen. Der Gehalt an Isocyanatgruppen in mmol/g ergibt sich aus dem Gehalt in Gew.-% nach ASTM D-5155-96 A.

In einer besonders bevorzugten Ausführungsform enthält die Komponente a) mindestens ein mehrfunktionelles Isocyanat, ausgewählt aus Diphenylmethan-4,4'-diisocyanat, Diphenylmethan-2,4'-diisocyanat, Diphenylmethan-2,2'-diisocyanat und oligomerem Diphenylmethandiisocyanat. Im Rahmen dieser bevorzugten Ausführungsform enthält die Komponente (a) besonders bevorzugt oligomeres Diphenylmethandiisocyanat und weist eine Funktionalität von mindestens 2,4 auf.

Die Viskosität der eingesetzten Komponente a) kann in einem weiten Bereich variieren. Vorzugsweise weist die Komponente a) eine Viskosität von 100 bis 3000 mPa·s, besonders bevorzugt von 200 bis 2500 mPa·s, auf.

In einer besonders bevorzugten Ausführungsform liegt als Komponente a) eine Mischung von 1,4'-Diphenylmethandiisocyanat mit höherfunktionellen Oligomeren und Isomeren (Roh-MDI), mit einem NCO-Gehalt von 20 bis 40 Masse-%, bevorzugt 25 bis 35 Masse-%, beispielsweise 31,5 Masse-% und einer mittleren Funktionalität von 2 bis 4, bevorzugt 2,5 bis 3,5, auf, beispielsweise ca. 2,7, vor.

In dem erhaltenen Polyurethanschaum liegt das Polyisocyanat (a1) im Allgemeinen in einer Menge von 100 bis 250 Gew.-%, bevorzugt 160 bis 200 Gew.-%, besonders bevorzugt 170 bis 190 Gew.-%, jeweils bezogen auf die Summe der Komponenten (a) und (b), vor.

Erfindungsgemäß umfasst Komponente b) mindestens eine mehrfunktionelle gegenüber Isocyanaten reaktive Verbindung (b1). Mehrfunktionelle gegenüber Isocyanaten reaktive Verbindungen sind solche, die mindestens zwei gegenüber Isocyanaten reaktive Wasserstoffatome aufweisen, insbesondere mindestens zwei gegenüber Isocyanaten reaktive funktionelle Gruppen.

Die eingesetzten Verbindungen (b1) der Komponente b) weisen bevorzugt eine Funktionalität von 2 bis 8, insbesondere von 2 bis 6 auf. Sofern mehrere unterschiedliche Verbindungen als Komponente b) zum Einsatz kommen, dann beträgt die gewichtsmittlere Funktionalität der Verbindung (b1) vorzugsweise 2,2 bis 5, besonders bevorzugt 2,4 bis 4, ganz besonders bevorzugt von 2,6 bis 3,8. Unter gewichtsmittlerer Funktionalität wird der Wert verstanden, der resultiert, wenn man die Funktionalität jeder Verbindung (b1) mit dem Gewichtsanteil dieser Verbindung in der Komponente b) gewichtet.

Polyole und insbesondere Polyetherpolyole sind als Verbindungen (b1) bevorzugt. Der Begriff Polyetherpolyol wird synonym zu dem Begriff Polyetherol verwendet und kennzeichnet alkoxylierte Verbindungen mit mindestens zwei reaktiven Hydroxylgruppen.

Bevorzugte Polyetherpolyole (b1) besitzen eine Funktionalität von 2 bis 8 und weisen Hydroxylzahlen von 100 mgKOH/g bis 1200 mgKOH/g, bevorzugt 150 bis 800 mgKOH/g, insbesondere 200 mgKOH/g bis 550 mgKOH/g auf. Alle Hydroxylzahlen in der vorliegenden Erfindung werden nach DIN 53240 bestimmt.

Im Allgemeinen beträgt der Anteil der mehrfunktionellen gegenüber Isocyanaten reaktiven Verbindung, bezogen auf das Gesamtgewicht der Komponente b) 40 bis 98 Gew.-%, bevorzugt 50 bis 97 Gew.-%, besonders bevorzugt 60 bis 95 Gew.-%.

Die im Rahmen von Komponente b) bevorzugten Polyetherole (b1) können nach bekannten Verfahren, beispielsweise durch anionische Polymerisation von einem oder mehreren Alkylenoxiden mit 2 bis 4 Kohlenstoffatomen mit Alkalihydroxiden, wie Natrium- oder Kaliumhydroxid, Alkalialkoholaten, wie Natriummethylat, Natrium- oder Kaliumethylat oder Kaliumisopropylat, oder aminischen Alkoxylierungs-Katalysatoren, wie Dimethylethanolamin (DMEOA), Imidazol und/oder Imidazolderivate, unter Verwendung mindestens eines Startermoleküls, das 2 bis 8, vorzugsweise 2 bis 6 reaktive Wasserstoffatome gebunden enthält, oder durch kationische Polymerisation mit Lewis-Säuren, wie Antimonpentachlorid, Borfluorid-Etherat oder Bleicherde, hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Besonders bevorzugte Alkylenoxide sind 1,2-Propylenoxid und Ethylenoxid.

Vorzugsweise umfasst Komponente b) mindestens ein Polyetherpolyol mit einer Hydroxylzahl von 200 bis 400 mgKOH/g, insbesondere von 230 bis 350 mgKOH/g und einer Funktionalität von 2 bis 3. Die vorgenannten Bereiche gewährleisten ein gutes Fliessverhalten der reaktiven Polyurethanmischung.

Die Komponente b) kann darüber hinaus mindestens ein Polyetherpolyol mit einer Hydroxylzahl von 300 bis 600 mgKOH/g, insbesondere 350 bis 550 mgKOH/g und einer Funktionalität von 4 bis 8, insbesondere 4 bis 6, umfassen. Die vorgenannten Bereiche führen zu einer guten chemischen Vernetzung der reaktiven Polyurethanmischung.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan. Besonders bevorzugt sind die genannten diprimären Amine, beispielsweise Ethylendiamin.

Als Startermoleküle kommen ferner in Betracht: Alkanolamine, wie z. B. Ethanolamin, N-Methyl- und N-Ethylethanolamin, Dialkanolamine, wie z. B. Diethanolamin, N-Methyl- und N-Ethyldiethanolamin, und Trialkanolamine, wie z. B. Triethanolamin, und Ammoniak.

Vorzugsweise verwendet werden zwei oder mehrwertige Alkohole, wie Ethandiol, Propandiol-1,2 und -1,3, Diethylenglykol (DEG), Dipropylenglykol, Butandiol-1,4, Hexandiol-1,6, Glycerin, Trimethylolpropan, Pentaerythrit, Sorbit und Saccharose.

Als Verbindungen (b1) kommen darüber hinaus Polyesteralkohole mit Hydroxylzahlen von 100 bis 1200 mgKOH/g in Betracht.

Bevorzugte Polyesteralkohole werden durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren, hergestellt.

Weitere Angaben zu den bevorzugten Polyetheralkoholen und Polyesteralkoholen sowie ihrer Herstellung finden sich beispielsweise im Kunststoffhandbuch, Band 7 "Polyurethane", herausgegeben von Günter Oertel, Carl-Hanser-Verlag München, 3. Auflage, 1993.

Weiter wird in Schritt A) mindestens ein Treibmittel (c) zugemischt. Das Treibmittel kann in der Komponente a), vorzugsweise aber in der Komponente b) enthalten sein.

Als Treibmittel können im Allgemeinen die dem Fachmann bekannten Treibmittel eingesetzt werden, beispielsweise Wasser und/oder Carbonsäuren, insbesondere Ameisensäure, das mit Isocyanatgruppen unter Abspaltung von Kohlendioxid reagiert (chemische Treibmittel). Auch physikalische Treibmittel können eingesetzt werden. Dabei handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 50 °C. Zu den physikalischen Treibmitteln zählen auch Verbindungen, die bei Raumtemperatur gasförmig sind und unter Druck in die Einsatzkomponenten eingebracht bzw. in ihnen gelöst werden, beispielsweise Kohlendioxid, niedrigsiedende Alkane und Fluoralkane. Die Verbindungen sind bevorzugt ausgewählt aus der Gruppe bestehend aus $C_3$-$C_5$-Alkanen, $C_4$-$C_6$-Cycloalkanen, Di-$C_1$-$C_4$-alkylethern, Estern, Ketonen, Acetalen, Fluoralkanen mit 1 bis 8 Kohlenstoffatomen, und Tetraalkylsilanen mit 1 bis 3 Kohlenstoffatomen in der Alkylkette, insbesondere Tetramethylsilan. Als Beispiele seien genannt Propan, n-Butan, Isobutan, Cyclobutan, n-Pentan, Isopentan, Cyclopentan, Cyclohexan, Dimethylether, Methylethylether, Methylbutylether, Diethylether, Methylformiat, Dimethyloxalat, Ethylacetat, Aceton, Methylethylketon, sowie $C_2$-$C_4$-Fluoralkane, die in der Troposphäre abgebaut werden können und deshalb für die Ozonschicht unschädlich sind. Beispiele für Treibmittel sind Trifluormethan, Difluormethan, Dichlormethan, 1,1,1,3,3-Pentafluorbutan, 1,1,1,3,3-Pentafluorpropan, 1,1,1,2-Tetrafluorethan, Difluorethan und Heptafluorpropan, Dichlormonofluormethan, Chlordifluorethane, 1,1-Dichlor-2,2,2-trifluorethan, 1,1,1,3,3-Pentafluorpropan, 2,2-Dichlor-2-fluorethan und Heptafluorpropan sowie teilhalogenierten $C_2$-$C_4$-Fluorolefinen wie trans-1,3,3,3 Tetrafluorprop-1-en (HFO-1234ze), 3,3,3-Trifluor-1-chlorprop-1-en (HFO-1233d), 2,3,3,3-Tetrafluorprop-1-en (HFO-1234yf), FEA 1100 (1,1,1,4,4,4-Hexafluor-2-buten) und FEA 1200. Die genannten physikalischen Treibmittel können allein oder in beliebigen Kombinationen untereinander eingesetzt werden.

Bevorzugte Treibmittel sind Ameisensäure, halogenierte Kohlenwasserstoffe, teilhalogenierte Fluorkohlenwasserstoffe, Wasser, oder Mischungen davon.

Das Treibmittel liegt in dem Polyurethan-Schaumstoff im Allgemeinen in einer Menge von 1 bis 25 Gew.-%, bevorzugt 2 bis 10 Gew.-%, jeweils bezogen auf die Summe der Komponenten (a) und (b), vor.

Bevorzugt wird in Schritt A) auch mindestens ein Katalysator (d) zugemischt. Der Katalysator ist im Allgemeinen in der Komponente b) enthalten, vorzugsweise zusammen mit dem Treibmittel (c). Als Katalysatoren zur Herstellung der Polyurethan-Schaumkerne werden insbesondere Verbindungen verwendet, die die Reaktion der reaktiven Wasserstoffatome, insbesondere Hydroxylgruppen, enthaltenden Verbindungen (b1) der Komponente (b) mit den Polyisocyanaten (a1) stark beschleunigen.

Zweckmäßigerweise verwendet werden basische Polyurethankatalysatoren, beispielsweise tertiäre Amine, wie Triethylamin, Tributylamin, Dimethylbenzylamin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N,N-Tetramethylbutandiamin, N,N,N,N-Tetramethylhexandiamin-1,6, Pentamethyldiethylentriamin, Bis(2-dimethylaminoethyl)ether, Dimethylpiperazin, N-Dimethylaminoethylpiperidin, 1,2-Dimethylimidazol, 1-Azabicyclo-(2,2,0)-octan, 1,4-Diazabicyclo-(2,2,2)-octan(Dabco) und Alkanolaminverbindungen, wie Triethanolamin, Triisopropanolamin, N-Methyl- und N-Ethyldiethanolamin, Dimethylaminoethanol, 2-(N,N-Dimethylamino-ethoxy)ethanol, N,N',N"-Tris-(dialkylaminoalkyl)hexahydrotriazine, z. B. N,N',N"-Tris-(dimethylaminopropyl)-s-hexahydrotriazin, und Triethylendiamin. Geeignet sind jedoch auch Metallsalze, wie Eisen(II)-chlorid, Zinkchlorid, Bleioctoat und vorzugsweise Zinnsalze, wie Zinndioctoat, Zinndiethylhexoat und Dibutylzinndilaurat sowie insbesondere Mischungen aus tertiären Aminen und organischen Zinnsalzen.

Als Katalysatoren kommen ferner in Betracht: Amidine, wie 2,3-Dimethyl-3,4,5,6-tetrahydro-pyrimidin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, Alkalicarboxylate sowie Alkalisalze von langkettigen Fettsäuren mit 10 bis 20 C-Atomen und gegebenenfalls seitenständigen OH-Gruppen. Vorzugsweise verwendet werden 0,001 bis 10 Gew.-teile Katalysator bzw. Katalysatorkombination, bezogen (d. h. gerechnet) auf 100 Gewichtsteile der Komponente (b1). Es besteht auch die Möglichkeit, die Reaktionen ohne Katalyse ablaufen zu lassen. In diesem Fall wird die katalytische Aktivität von mit Aminen gestarteten Polyolen ausgenutzt.

Wird beim Verschäumen ein größerer Polyisocyanatüberschuss verwendet, kommen als Katalysatoren für die Trimerisierungsreaktion der überschüssigen NCO-Gruppen untereinander ferner in Betracht: Isocyanuratgruppen bildende Katalysatoren, beispielsweise Ammoniumionen- oder Alkalimetallsalze, speziell Ammonium- oder Alkalimetallcarboxylate, alleine oder in Kombination mit tertiären Aminen. Die Isocyanurat-Bildung führt zu besonders flammwidrigen PIR-Schaumstoffen.

Weitere Angaben zu den genannten und weitere Ausgangsstoffe können der Fachliteratur, beispielsweise dem Kunststoffhandbuch, Band VII, Polyurethane, Carl Hanser Verlag München, Wien, 1., 2. und 3. Auflage 1966, 1983 und 1993, entnommen werden.

Gegebenenfalls wird in Schritt A) auch mindestens ein Kettenverlängerer (e) eingesetzt. Vorzugsweise kommt der Kettenverlängerer als Bestandteil der Komponente b) zur Anwendung. Unter Kettenverlängerern werden Verbindungen verstanden, die ein Molekulargewicht von 60 bis 400 g/mol aufweisen und 2 gegenüber Isocyanaten reaktive Wasserstoffatome aufweisen. Beispiele hierfür sind Butandiol, Diethylenglykol, Dipropylenglykol sowie Ethylenglykol.

Die Kettenverlängerer (e) werden im Allgemeinen in einer Menge von 2 bis 20 Gew.-%, bezogen auf die Summe der Komponenten (a), (b), (c) und (d), eingesetzt.

Gegebenenfalls wird in Schritt A) auch mindestens ein Vernetzer (f) eingesetzt. Vorzugsweise kommt der Vernetzer als Bestandteil der Komponente b) zur Anwendung. Als Vernetzer verwendet man vorzugsweise Alkanolamine und insbesondere Diole und/oder Triole mit Molekulargewichten kleiner als 400, vorzugsweise 60 bis 300.

Vernetzer werden im Allgemeinen in einer Menge von 1 bis 10 Gew.-%, bevorzugt von 2 bis 6 Gew.-%, bezogen auf die Summe der Komponenten (a) und (b) eingesetzt.

Vernetzer und Kettenverlängerer können einzeln oder in Kombination eingesetzt werden. Der Zusatz von Kettenverlängerern und/oder Vernetzern kann zur Modifizierung der mechanischen Eigenschaften vorteilhaft sein.

Die Komponente (b) kann auch weitere übliche Additive (g) enthalten, beispielsweise oberflächenaktive Substanzen, Stabilisatoren, wie Schaumstabilisatoren, Zellregler, Füllstoffe, Farbstoffe, Pigmente, Flammschutzmittel, Antistatika, Hydrolyseschutzmittel, fungistatisch und bakteriostatisch wirkende Substanzen und Mischungen davon.

Geeignete Flammschutzmittel sind im Allgemeinen die aus dem Stand der Technik bekannten Flammschutzmittel, beispielsweise bromierte Ether (Ixol), bromierte Alkohole wie Dibromneopentylakohol, Tribromneopentylalkohol und PHT-4-Diol sowie chlorierte Phosphate wie z. B. , Tris-(2-chlorethyl)phosphat, Tris-(2-chlorisopropyl)phosphat (TCPP), Tris(1,3-dichlor-isopropyl)phosphat, Tris-(2,3-dibrompropyl)phosphat und Tetrakis-(2-chlorethyl)-ethylendiphosphat.

Als weitere flüssige halogenfreie Flammschutzmittel können Diethyl-ethanphosphonat (DEEP), Triethylphosphat (TEP), Dimethylpropylphosphonat (DMPP), Diphenylkresylphosphat (DPK) und andere verwendet werden.

Die Flammschutzmittel werden im allgemeinen in einer Menge von 2 bis 65 Gew.-%, bevorzugt von 5 bis 60 Gew.-%, mehr bevorzugt von 5 bis 50 Gew.-%, bezogen auf die Summe der Komponenten (a) und (b), eingesetzt.

Das Verhältnis von OCN-Gruppen zu OH-Gruppen, der so genannte ISO-Index, in der Reaktionsmischung zur Herstellung des erfindungsgemäßen Polyurethan-Schaumstoffes beträgt 140 bis 180, bevorzugt 145 bis 165, besonders bevorzugt 150 bis 160. Dieser ISO-Index bewirkt, dass ein Polyurethan-Schaumstoff erhalten wird, der eine besonders vorteilhafte Kombination von niedriger Wärmeleitfähigkeit und thermischer Stabilität aufweist.

Das Vermischen der Komponenten (a) und (b) erfolgt nach dem Hochdruckinjektionsverfahren im oneshot-Verfahren oder multishot-Verfahren. Bei diesem Mischprinzip strömen die Komponenten mit hoher Geschwindigkeit in eine Mischkammer und werden dort im Durchlauf unter Ausnutzung der kinetischen Energie vermischt. Die Mischkammer wird vorzugsweise im Gegenstrom betrieben. Es können ein oder mehrere Mischköpfe verwendet werden und der Hohlraum zwischen den Baustoffplatten kann in mehrere Kavitäten unterteilt sein. Die Komponenten (a) und (b) können organische Lösungsmittel enthalten, vorzugsweise werden sie jedoch ohne Lösungsmittel eingesetzt. Die Komponenten (a) und (b) werden bei einem Druck von mindestens 100 bar, insbesondere bei einem Druck im Bereich von 100 bar bis 300 bar, in die Mischkammer dosiert. Weitere Angaben zum Hochdruckinjektionsverfahren können der Fachliteratur, beispielsweise dem Kunststoffhandbuch, Band VII, Polyurethane, Carl Hanser Verlag München, Wien, 3. Auflage 1993, entnommen werden.

Das Vermischen der Komponenten (a) und (b) erfolgt im Allgemeinen bei einer Temperatur im Bereich von 5 bis 70 °C, insbesondere 10 bis 50 °C.

Schritt B):

Das aus der Mischkammer austretende noch nicht aufgeschäumte Gemisch wird in einen Hohlraum zwischen zwei Baustoffplatten eingebracht. Die Flächen der Baustoffplatten sind voneinander beabstandet und im Wesentlichen parallel zueinander angeordnet, so dass zwischen den Platten ein Hohlraum vorhanden ist, der den Schaumkern aufnimmt. Zweckmäßigerweise werden die aufrecht stehenden oder liegenden Baustoffplatten durch eine Außenschalung gehalten. Der Abstand zwischen den Baustoffplatten wird im Allgemeinen durch Abstandshalter, beispielsweise aus Kunststoff, eingestellt. In der Regel liegt der Abstand im Bereich von 1 bis 30 cm, bevorzugt 4 bis 22 cm, insbesondere 8 bis 20 cm, d. h. die Dicke des Polyurethan-Schaumkerns (Dämmschicht) ist entsprechend.

Die Menge des in den Hohlraum eingebrachten Gemisches richtet sich nach der Größe des Hohlraums. Im Allgemeinen wird die Menge so bemessen ist, dass die Gesamteinschussrohdichte weniger als 100 kg/m$^3$, insbesondere weniger als 80 kg/m$^3$, beträgt. Vorzugsweise liegt die Gesamteinschussrohdichte im Bereich von 20 bis 100 kg/m$^3$, bevorzugt 20 bis 80 kg/m$^3$, und insbesondere 30 bis 60 kg/m$^3$ oder 30 bis 50 kg/m$^3$. Unter Gesamteinschussrohdichte ist die Gesamtmenge an eingefülltem Gemisch aus Schritt A), bezogen auf das Gesamtvolumen des Schaums im Hohlraum, zu verstehen.

Das Hochdruckinjektionsverfahren erlaubt die Herstellung des Gemisches aus den Komponenten (a) und (b) und dessen Einbringen in den Hohlraum in großen Mengen und in kurzer Zeit. Das Verfahren trägt daher erheblich zur wirtschaftlichen Herstellung der Sandwich-Bauelemente bei. Im allgemeinen ist es möglich, Mengen an Gemisch im Bereich von 0,1 bis 8 kg/s, vorzugsweise 1 bis 8 kg/s, und insbesondere 2 bis 8 kg/s, in den Hohlraum einzubringen.

Die Baustoffplatten sind insbesondere aus anorganischen mineralischen Materialien gefertigt. Beispiele hierfür sind Betonplatten, Gipsplatten und Platten aus Geopolymeren. Für die Herstellung der Betonplatten können alle üblichen Zemente, insbesondere Portlandzement, zusammen mit den üblichen Zusätzen eingesetzt werden. Zu den Zementen zählen auch latent hydraulische Bindemittel, wie industrielle und synthetische Schlacken, insbesondere Hochofenschlacke, gefälltes Silika, pyrogenes Silika, Mikrosilika, Metakaolin, Aluminosilikate, oder Gemische davon. Gipsplatten sind üblicherweise aus gipshaltigen Materialien gefertigt, wie Mörtelgips, Maschinengips, Stuckgips, etc. Geopolymere, die für die Herstellung von Geopolymerplatten verwendet werden, sind in wässrigem alkalischem Medium härtende anorganische Bindemittelsysteme auf der Basis von reaktiven wasserunlöslichen Verbindungen auf SiO$_2$- und Al$_2$O$_3$-Basis, wie Mikrosilika, Metakaolin, Aluminosilikate, Flugasche, aktivierte Tone, puzzolanische Materialien oder Gemische davon. Geopolymere sind beispielsweise beschrieben in US 4,349,386, WO 85/03699 und US 4,472,199.

Die Bauplatten können auch Fasern, Textilien oder eine Bewehrung umfassen. Für die Fasern, Textilien oder eine Bewehrung kommen übliche Materialien in Frage, die aus Kunststoff oder Metall bestehen können. Durch diese Zusätze wird die Zugfestigkeit der Baustoffplatten verbessert.

Die Abmessungen der Baustoffplatten können in einem weiten Bereich gewählt werden. Es sind Größen von bis zu 3,5 m x 15 m bei einer Dicke von bis zu 15 cm möglich.

Nach einer bevorzugten Ausführungsform ist wenigstens eine der Baustoffplatten auf der dem Hohlraum zugewandten Seite wenigstens teilweise, insbesondere auf der ganzen Fläche, mit einer Schicht aus einem Primer versehen. Zweckmäßigerweise sind beide Baustoffplatten mit dem Primer versehen.

Unter Primer ist hier eine Beschichtung zu verstehen, die durch Auftragen und Aushärten einer Zusammensetzung erhalten wird, die ein organisches Bindemittel umfasst. Das organische Bindemittel kann ein physikalisch härtendes oder chemisch härtendes Bindemittel sein. Physikalisch härtende Bindemittel sind Lösungen von Polymeren in organischen Lösungsmitteln und/oder Wasser. Das Härten erfolgt dann, indem das Wasser und/oder das organische Lösungsmittel verdampft. Durch chemische Reaktion härtbare Bindemittel sind monomere, oligomere oder polymere Verbindungen mit chemisch reaktiven Gruppen, die in reiner Form oder als Lösung in Wasser oder in einem geeigneten organischen Lösungsmittel in die Zusammensetzung eingebracht werden. Die reaktiven Gruppen sorgen dann mittels einer chemischen Reaktion dafür, dass das organische Bindemittel über einen Zeitraum von wenigen Stunden bis hin zu 30 Tagen zu polymeren Strukturen aushärtet. Das organische Bindemittel kann dabei als Einkomponentensystem oder als Zwei- oder Mehrkomponentensystem eingebracht werden. Bei Einkomponentensystemen liegen miteinander reaktive chemische Gruppen nebeneinander im System vor. Die Aktivierung zur Reaktion erfolgt dann über einen Schalt- oder Triggermechanismus, zum Beispiel durch Änderung des pH-Wertes, durch Bestrahlung mit kurzwelligem Licht, durch Wärmezufuhr oder durch Oxidation mit Luftsauerstoff. Bei Zwei- oder Mehrkomponentensystemen liegen die miteinander reaktiven Monomere, Oligomere oder Polymere zunächst getrennt vor. Erst durch Mischung der Komponenten wird das organische Bindemittel aktiviert und der Aufbau von Molekulargewicht kann durch chemische Reaktionen stattfinden. Auch Kombination aus Filmbildung und Vernetzung können in dem organischen Bindemittel zum Tragen kommen.

Geeignete organische Bindemittel sind dem Fachmann bekannt, beispielsweise können Polyurethane, Polyharnstoffe, Polyacrylate, Polystyrole, Polystyrolcopolymere, Polyvinylacetate, Polyether, Alkydharze oder Epoxidharze eingesetzt werden. Physikalisch härtende Bindemittel sind wässrige Dispersionen, zum Beispiel Acrylatdispersionen, Ethylenvinylacetatdispersionen, Polyurethandispersionen oder Styrolbutadiendispersionen. Als chemisch härtende Einkomponentensysteme sind zum Beispiel Polyurethane oder Alkydharze geeignet. Als chemisch härtende Zwei- oder Mehrkomponentensysteme können beispielsweise Epoxidharze, Polyurethane, Polyharnstoffe eingesetzt werden. Organische Bindemittel, die eine Kombinationen aus Filmbildung und Vernetzung aufweisen können, sind zum Beispiel nachvernetzende Acrylatdispersionen oder nachvernetzende Alkydharzdispersionen.

Gemäß einer Ausführungsform handelt es sich bei dem Primer um Epoxidharze, wie Epoxidharze auf Bisphenolbasis, z. B. Bisphenol A, Novolak-Epoxidharze, aliphatische Epoxidharze oder halogenierte Epoxidharze. Bei Epoxidharzen, insbesondere auf Bisphenolbasis oder bei Novolak-Epoxidharzen, ist das organische Bindemittel in der Regel ein Monomer oder Oligomer, vorzugsweise mit bis zu 4 Einheiten, das mindestens zwei Diglycidyleinheiten aufweist. Die Aushärtung erfolgt durch Zugabe eines Härters, im allgemeinen Polyamine, wie 1,3-Diaminobenzol, Diethylentriamin etc.

Gemäß einer Ausführungsform enthalten die Epoxidharze Reaktivverdünner, wie Monoglycidylether, beispielsweise Glycidylether von einwertigen Phenolen oder Alkoholen, oder Polyglycidylether, die mindestens zwei Epoxidgruppen aufweisen.

Die auf die Baustoffplatten aufzutragende Beschichtung kann außerdem übliche Bestandteile enthalten, wie Lösungsmittel, Entschäumer, Füllstoffe, Pigmente, Dispergieradditive, Rheologiestellmittel, Lichtsabilisatoren oder Gemische davon. Die Zusammensetzung kann durch sprühen, rakeln, pinseln, rollen direkt auf den mineralischen Untergrund der Baustoffplatte aufgebracht werden.

Der Primer wird im Allgemeinen in einer Menge von 20 bis 600 g/m$^2$, z.B. 50 bis 600 g/m$^2$ aufgetragen.

Weitere Angaben zu geeigneten Epoxidharzen finden sich beispielsweise in Ullmann's Encyclopedia of Industrial Chemistry, 5th edition, vol. A9, page 547.

Nach dem Einbringen des Gemisches aus den Komponenten (a) und (b) in den Hohlraum zwischen den Baustoffplatten erfolgt das Aufschäumen des Gemisches auf Grund der Wirkung des Treibmittels unter Bildung eines Polyurethanschaums. Dabei erhält man einen Schaum mit einer Verdichtung, die im Bereich von 1,2 bis 2,5, insbesondere 1,25 bis 2,5, liegt. Unter Verdichtung ist der Quotient aus der Dichte des Schaums im Hohlraum dividiert durch die Dichte des entsprechenden unverdichteten (frei geschäumten) Schaums zu verstehen. Die Dichte des Schaums lässt sich durch die eingebrachte Schaummenge oder durch die Menge des Treibmittels steuern. Die Gesamtrohdichte des Schaumkerns liegt im Allgemeinen im Bereich von 20 bis 100 kg/m$^3$, bevorzugt 20 bis 80 kg/m$^3$, und insbesondere 30 bis 60 kg/m$^3$ oder 30 bis 50 kg/m$^3$.

Bei dem Schaum handelt es sich um einen Hartschaum, der den Hohlraum im Allgemeinen vollständig ausfüllt. Mit dem erfindungsgemäßen Verfahren ist eine wirtschaftliche Herstellung von gedämmten Sandwich-Bauelementen mit kurzer Taktzeit möglich. Es ist somit nicht mehr erforderlich, den Dämmungsschritt außerhalb der Taktfertigung der Sandwich-Bauelemente selber vorzunehmen, sondern er kann vielmehr in-factory bei der Herstellung der Sandwich-Bauelemente erfolgen. Außerdem hat sich überraschenderweise gezeigt, dass man mit dem erfindungsgemäßen Verfahren auf eine Bewehrung der Baustoffplatten verzichten kann, weil die Festigkeit der Sandwich-Bauelemente verbessert ist im Vergleich zu den nach dem Stand der Technik ohne Bewehrung hergestellten Sandwich-Bauelementen. Schließlich hat sich gezeigt, dass auf Grund der stabilen Verbunds zwischen Betonplatten und Primer auf Abstandshalter verzichtet werden kann, so dass die Dämmwirkung noch zusätzlich verbessert wird.

Gegenstand der vorliegenden Erfindung ist daher auch ein Sandwich-Bauelement, das nach dem erfindungsgemäßen Verfahren erhältlich ist. In einer Ausführungsform weist der Schaum des Sandwich-Bauelements eine Wärmeleitfähigkeit im Bereich von 16 bis 30 mW/m·K, insbesondere 22 bis 28 mW/m·K, auf. Dabei handelt es sich um die Wärmeleitfähigkeit des frischen Schaums, bestimmt gemäß DIN EN 14318-1 nach 1-8 d nach 16 h Vorkonditionierung bei (23 ± 3) °C und relativer Luftfeuchtigkeit von (50 ± 10)%, gemessen in einer Raumrichtung die senkrecht zu den Baustoffplatten orientiert ist.

Die Sandwich-Bauelemente können in üblicher Weise unter anderem als tragende Wandelemente, nicht tragende Wandelemente, beispielsweise als Fassadenverkleidung, und als Deckenelemente zur Anwendung kommen.

Die beigefügten Figuren und die nachfolgenden Beispiele erläutern die Erfindung.

Fig. 1 zeigt eine Definition der Raumrichtungen, die zur Definition der PU-Schäume herangezogen werden.

Fig. 2 zeigt Last-Verschiebungskurven verschiedener Sandwich-Elemente.

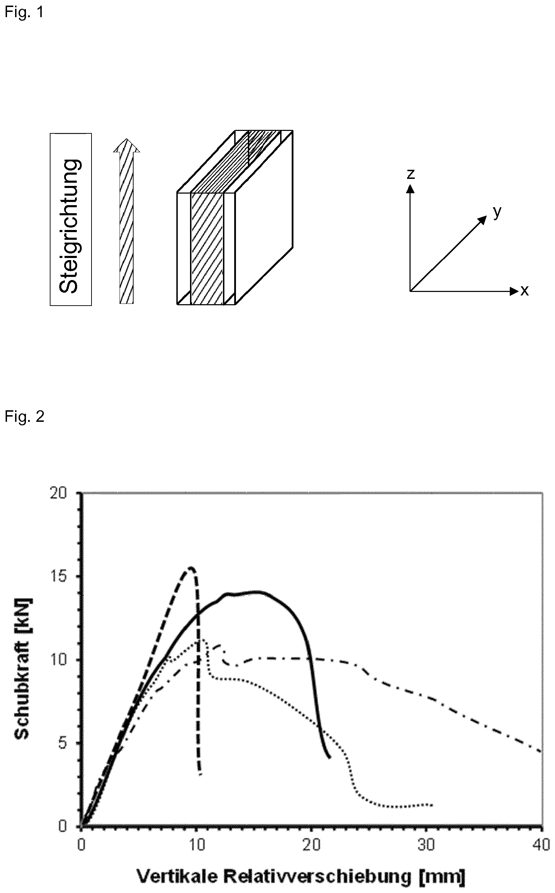

Mit Bezug auf Fig. 1 sind zwei Baustoffplatten voneinander beabstandet und im Wesentlichen parallel zueinander angeordnet, so dass zwischen den Platten ein Hohlraum vorhanden ist, der den Schaumkern aufnimmt. Dabei bezeichnet x eine Raumrichtung, die senkrecht zu den Baustoffplatten orientiert ist, z die Steigrichtung des Schaums und y eine Raumrichtung, die parallel zu den Baustoffplatten und senkrecht zur Steigrichtung orientiert ist.

Beispiel 1

In den nachfolgenden Beispielen wurde als Primer jeweils ein Epoxy-Primer oder im Beispiel d) auch ein PU-Primer verwendet. Der Primer wurde bei allen Versuchen von Hand auf den Beton aufgebracht (Pinsel oder Rolle) und über Nacht getrocknet, bevor das PU-Reaktionsgemisch eingebracht wurde.

Der verwendete Polyurethanschaum (PU Schaum) hatte eine Geschlossenzelligkeit von 91 % und wurde jeweils hergestellt auf Basis von polymerem MDI und Polyetherpolyol und Wasser und/oder HFC 245FA (1,1,1,3,3-Pentafluorpropan) als Treibmittel.

Folgende Betone wurden verwendet:

Beton 1: auf Basis von Zement (CEM I 52.5 R); Druckfestigkeit 55 MPa.

Beton 2: auf Basis von Zement (CEM I 32.5 N); Druckfestigkeit 29 MPa.

Beton 3: auf Basis von Zement (CEM III/B 42.5 NW/MS/NA); Druckfestigkeit 81.9 MPa

Die Druckfestigkeiten (in einer Raumrichtung, die senkrecht zu den Baustoffplatten orientiert ist) wurden bestimmt nach DIN EN 1048.

a) $CO_2$-Diffusion mit und ohne Primer

Für diesen Test wurden Betonwürfel mit 15 cm Kantenlänge und Betonprismen (12 x 12 x 36 $cm^3$) aus Beton 1 hergestellt.

Die $CO_2$-Diffusion/Carbonatisierung wurde bei einem $CO_2$-Gehalt von 4 %, einer relativen Feuchte von 57 % und einer Temperatur von 20 °C in Anlehnung an die Schweizer Norm SN 505 262/1 (Anhang I) durchgeführt. Diese Werte werden in einer Karbonatisierungskammer aktiv geregelt. Die normgemäße Vorlagerung für die Prüfkörper nach dem Ausschalen war eine Wasserlagerung bis zum 3. Tag und danach eine Lagerung bei 20 °C und 57 % RF für 25 Tage. Der Grund dafür ist, dass bei dieser Konditionierung der Beton trocknen kann und damit nicht zu viel Feuchtigkeit in die Karbonatisierungskammern gebracht wird. Auf die Hälfte der Probekörper wurden 500 $g/m^2$ des Epoxy-Primers aufgetragen.

Für die Bestimmung der Karbonatisierungstiefe wird von den Prismen eine Scheibe abgespalten und die neue Bruchfläche mit Phenolphthalein besprüht. Der karbonatisierte Bereich verfärbt sich nicht, während der nicht karbonatisierte Bereich eine rosa Farbe annimmt. Pro Prismaseite wird die Karbonatisierungstiefe an fünf Stellen bestimmt. Dies ergibt 20 Messungen pro Alter. Die Karbonatisierungstiefe wird bestimmt, bevor die Prüfkörper in die Kammern kommen, sowie nach 7, 28 und 63 Tagen. Weil der Mörtel sehr schnell karbonatisiert, wurde dort die Karbonatisierungstiefe nach 0, 7, 14, 21 und 46 Tagen in der Karbonatisierungskammer ermittelt. Der Karbonatisierungs-koeffizient KN wurde wie folgt berechnet:

$$dK = A + KS \cdot t1/2$$

$KN = a \cdot b \cdot c \cdot KS$

$KN$ = Karbonatisierungskoeffizient unter natürlichen Bedingungen mit einem $CO_2$-Gehalt von $\quad 0.04 \; \% \; [mm/\sqrt{Jahr}]$

$a$ = Umrechnung von 1 Tag auf 1 Jahr (365/1)1/2 = 19.10
$b$ = Umrechnungsfaktor von 4.0 auf 0.04 Vol% $CO_2$
$c$ = Korrekturfaktor für Schnellkarbonatisierung

| Material | $CO_2$ Aufnahmekoeffizient $KN \; [mm/\sqrt{Jahr}]$ |
|---|---|
| Beton unbeschichtet (ohne Primer) | 12.5 |
| Beton beschichtet (mit Primer - 500g/m2) | 0.0 |

b) Haftzugwerte mit und ohne Primer

Direkte Haftzugfestigkeiten mit und ohne Primer zeigen bei den Probekörpern aus Beton 2 mit Primer eine deutliche höhere Festigkeit. Ein zwischen 2 Betonplatten auf Primer eingebrachter vorgeschäumter PU Schaum (Blockschaum) erreicht Haftzugfestigkeiten von ca. 0,14 $N/mm^2$, ein ohne Primer zwischen 2 Betonplatten eingeschäumter PU Schaum (HDI-Verfahren; Hochdruckdosiervorrichtung; Druck >120 bar) mit einer Dichte von 50g/l erreicht ca. 0,16 $N/mm^2$ und ein mit Primer nach dem HDI-Verfahren eingeschäumter PU Schaum ca. 0,20 $N/mm^2$. Bei höheren Dichten des PU Schaumes und der Verwendung eines Primers, kommt es in Abhängigkeit der Betonfestigkeit zu einem Reißen des Schaumes selber.

Beispiel I) mit Primer, Beton 2:

Mit PU Schaum Dichte 50 g/l: Versagen des PU Schaumes bei 0,20 $N/mm^2$
Mit PU Schaum Dichte 100 g/l: Versagen des Beton-Probekörpers bei 0,23 $N/mm^2$

Beispiel II) mit Primer, Beton 3:

Betonfestigkeit 81.9 MPa
Mit PU Schaum Dichte 90 g/l: Versagen des Schaums bei 0,32 $N/mm^2$

c) Last/Verformung mit und ohne Hochdruckinjektion

Zur Bestimmung der Tragfähigkeit des Sandwichelementes mit PU Schaumkern zwischen Platten aus Beton 1 wurden Last-Verschiebungskurven bei Schubbelastung gemessen. Probekörper: ausgeschnitten aus den Sandwich-Elementen. Maße 25 x 25 cm x 2,5 cm Betonplatten, 15 cm Schaumdicke. Die Ergebnisse sind in Figur 2 graphisch dargestellt. Bei eingeklebtem PU Blockschaum kommt es zu einem schlagartigen Versagen des Verbundes, dabei delaminiert der Schaum vom Sandwichelement (gestrichelte Linie). Alle per HDI eingebrachten Schäume zeigen ein duktiles Versagen, d. h. es kommt bei gleichbleibender Last zu einer größeren und gleichmäßigeren Verformung, keinem schlagartigen Versagen.

Gestrichelt: Blockschaum als Platte mit 50 g/l (Verdichtung 1,0) eingeklebt mit PU Bauschaum: max. Last 15 kN und max. Verformung 10 mm
Schwarz: Injektionsschaum mit 50 g/l (Verdichtung etwa 1,5) mit Primer: max Last ca. 15 kN und max. Verformung 20 mm
Punkt-Strich: Injektionsschaum mit 30 g/l (Verdichtung etwa 1,3) ohne Primer: max Last ca. 10 kN und max. Verformung > 40 mm
Punkte: Injektionsschaum mit 50 g/l (Verdichtung etwa 1,5)ohne Primer: max Last ca. 10 kN und max. Verformung 25 mm

d) Wärmeleitfähigkeit mit und ohne Primer

Die Primer waren ein Epoxy- und ein PU-Primer.

Die Sandwiche werden mit 2 Betonprobekörpern und PU-Hartschaum in der Mitte hergestellt. Die offenen Seiten werden in der Form mit Vakuumverpackungsfolie ausgelegt.

Maße Betonschalen: 20 x 20 x 2,0 cm
Schaum Volumen zwischen den Betonschalen: 20 x 20 x 6 cm (2,4L)

Die offenen Seiten werden in der Form mit VIP Folie (Vakuum Insulation Panel) ausgelegt. Platten aus PU Schaum werden gegen das Ausdiffundieren von Zellgasen mittels auflaminierter Alu-Folie mit einer Dicke von 80 $\mu$m geschützt (Referenz). Durch die Verwendung eines Epoxyprimers (Betonsystem) mit 500 g/m$^2$ Dicke kann der Austausch des Zellgases ebenfalls verhindert werden. Die gezeigten Ergebnisse sind gemessene Wärmeleitfähigkeiten (T.C.) nach beschleunigter Alterung, d. h. Lagerung bei 60 °C für 42 d.

| | Wärmeleitfähigkeit [mW/m·K] |
|---|---|
| PU Schaum mit VIP-Folien Kaschierung | 23,1 |
| PU Schaum ohne Kaschierung | 26,7 |
| Betonelement nicht vorgetrocknet mit Epoxyprimer 500 g/m$^2$ | 23,1 |
| Betonelement vorgetrocknet mit Epoxy Primer 500 g/m$^2$ | 23,7 |
| Betonelement vorgetrocknet mit PU Primer 500 g/m$^2$ | 26,3 |
| Betonelement vorgetrocknet ohne Primer | 25,5 |

Beispiel 2: Anisotropieuntersuchungen

Es wurden drei Probekörper hergestellt. Ein Volumen von 20 x 20 x 6 cm$^3$ (2,4L), das durch 2 cm dicke Betonplatten begrenzt war, wurde mit einem Polyurethanschaum ausgeschäumt. Der verwendete Polyurethanschaum (PU Schaum) wurde hergestellt auf Basis von polymerem MDI und Polyetherpolyol und Ameisensäure, 1,1,1,3,3-Pentafluorbutan und 1,1,1,3,3-Pentafluorpropan als Treibmittel.

Das Muster "Verdichtet, RD 45" wurde durch Hochdruckinjektionsschaum mit einer Verdichtung von etwa 1,35 geschäumt. Die Gesamteinschussrohdichte (Menge an eingefülltem flüssigem Polyurethan-Material bezogen auf das Gesamtvolumen des ausgeschäumten Volumens) betrug etwa 45 kg/m$^3$.

Das Muster "Frei, RD 45" wurde durch Ausfüllen mit Gießschaum frei geschäumt. Die Treibmittelmenge wurde so verringert, dass eine Gesamteinschussrohdichte etwa 45 kg/m$^3$ erreicht wurde.

Das Muster "Frei, RD 38" wurde durch Ausfüllen mit Gießschaum frei geschäumt. Die Zusammensetzung des flüssigen Polyurethan-Materials entsprach dem Muster "Verdichtet, RD 45"; aufgrund der fehlenden Verdichtung stellte sich eine Gesamteinschussrohdichte von lediglich etwa 38 kg/m$^3$ ein.

Aus den erhaltenen Schaumkörpern wurden in drei Raumrichtungen Parallepipede auf quadratischer Basis von 5 x 5 cm$^2$ und 50 mm Dicke geschnitten. Die mechanischen Eigenschaften der Prüfkörper in Dickenrichtung der Parallepipede wurden nach DIN EN ISO 844 untersucht.

Die Druckfestigkeit [N/mm$^2$] und Druck-E-Modul wurden bei 10% Stauchung/min bestimmt.

Die Wärmeleitfähigkeit wurde nach DIN EN 12667 bestimmt. Die Ergebnisse sind in der folgenden Tabelle zusammengefasst (Stabw. = Standardabweichung).

Tabelle

**Verdichtet, RD45**

Senkrecht zur Deckschicht (x)

| Prüfmerkmal | Mittelwert | Stabw. | Einheit |
|---|---|---|---|
| Druckfestigkeit/- spannung | 0.085 | 0.004 | N/mm² |
| Stauchung | 10.0 | 0.0 | % |
| Druck-E-Modul | 2.7 | 0.34 | N/mm² |
| Wärmeleitfähigkeit | 21.8 | 0.0 | mW/m*K |

Parallel zur Steigrichtung (z)

| Prüfmerkmal | Mittelwert | Stabw. | Einheit |
|---|---|---|---|
| Druckfestigkeit/- spannung | 0.100 | 0.018 | N/mm² |
| Stauchung | 7.9 | 1.8 | % |
| Druck-E-Modul | 2.66 | 0.56 | N/mm² |

3.Raumrichtung/Breite (y)

| Prüfmerkmal | Mittelwert | Stabw. | Einheit |
|---|---|---|---|
| Druckfestigkeit/- spannung | 0.093 | 0.014 | N/mm² |
| Stauchung | 6.7 | 2.9 | % |
| Druck-E-Modul | 2.54 | 0.52 | N/mm² |

**Frei, RD45**

Senkrecht zur Deckschicht (x)

| Prüfmerkmal | Mittelwert | Stabw. | Einheit |
|---|---|---|---|
| Druckfestigkeit/- spannung | 0.092 | 0.008 | N/mm² |
| Stauchung | 7.1 | 2.4 | % |
| Druck-E-Modul | 2.82 | 0.40 | N/mm² |
| Wärmeleitfähigkeit | 22.4 | 0.0 | mW/m*K |

Parallel zur Steigrichtung (z)

| Prüfmerkmal | Mittelwert | Stabw. | Einheit |
|---|---|---|---|
| Druckfestigkeit/- spannung | 0.208 | 0.002 | N/mm² |
| Stauchung | 4.4 | 0.2 | % |
| Druck-E-Modul | 6.99 | 0.06 | N/mm² |

3.Raumrichtung/Breite (y)

| Prüfmerkmal | Mittelwert | Stabw. | Einheit |
|---|---|---|---|
| Druckfestigkeit/- spannung | 0.117 | 0.015 | N/mm² |
| Stauchung | 9.0 | 1.0 | % |
| Druck-E-Modul | 2.95 | 0.80 | N/mm² |

**Frei, RD38**

Senkrecht zur Deckschicht (x)

| Prüfmerkmal | Mittelwert | Stabw. | Einheit |
|---|---|---|---|
| Druckfestigkeit/- spannung | 0.046 | 0.003 | N/mm² |
| Stauchung | 10.0 | 0.1 | % |
| Druck-E-Modul | 1.18 | 0.03 | N/mm² |
| Wärmeleitfähigkeit | 21.9 | 0.0 | mW/m*K |

Parallel zur Steigrichtung (z)

| Prüfmerkmal | Mittelwert | Stabw. | Einheit |
|---|---|---|---|
| Druckfestigkeit/- spannung | 0.122 | 0.002 | N/mm² |
| Stauchung | 4.3 | 0.3 | % |
| Druck-E-Modul | 3.95 | 0.26 | N/mm² |

3.Raumrichtung/Breite (y)

| Prüfmerkmal | Mittelwert | Stabw. | Einheit |
|---|---|---|---|
| Druckfestigkeit/- spannung | 0.102 | 0.005 | N/mm² |
| Stauchung | 6.9 | 2.6 | % |
| Druck-E-Modul | 2.87 | 0.17 | N/mm² |

Das Muster "Verdichtet, RD 45" zeigt eine geringe Anisotropie (Verhältnis Druck-E-Modul parallel zur Steigrichtung/senkrecht zur Deckschicht = 1,18) und einen guten Dämmwert von 21,8 mW/m*K. Das Muster "Frei, RD 45" weist eine vergleichbare Druckfestigkeit senkrecht zur Deckschicht auf, zeigt aber einen schlechteren Wärmedämmwert. Das Muster "Frei, RD 38" weist eine unzureichende Druckfestigkeit senkrecht zur Deckschicht auf.

## Patentansprüche

1. Sandwich-Bauelement aus mindestens zwei voneinander beabstandeten, im Wesentlichen parallel zueinander angeordneten Baustoffplatten mit einem Polyurethan-Schaumkern zwischen den beabstandeten Baustoffplatten, wobei das Verhältnis des höchsten gemessenen Druck-E-Moduls des Polyurethan- Schaumkerns in einer Raumrichtung, die parallel zu den Baustoffplatten orientiert ist, zum Druck-E-Modul des Polyurethan-Schaumkerns in einer Raumrichtung, die senkrecht zu den Baustoffplatten orientiert ist, weniger als 1,7 beträgt, wobei das Druck-E-Modul gemäß der Beschreibung gemessen wird, und der Schaumstoffkern erhältlich ist durch Verdichtung des Schaums im Bereich von 1,1 bis 2,5, wobei die Verdichtung der Quotient aus der Dichte des Schaums im Hohlraum dividiert durch die Dichte des frei geschäumten Schaumkörpers ist.

2. Sandwich-Bauelement nach Anspruch 1, wobei die Kerndichte des Polyurethan-Schaumkerns im Bereich von 20 bis 100 kg/m$^3$ liegt.

3. Sandwich-Bauelement nach Anspruch 1 oder 2, wobei wenigstens eine der Baustoffplatten auf der dem Polyurethan-Schaumkern zugewandten Seite wenigstens teilweise mit einem Primer versehen ist.

4. Sandwich-Bauelement nach einem der vorhergehenden Ansprüche, wobei die Baustoffplatten aus Beton, Geopolymeren oder Gips gefertigt sind.

5. Sandwich-Bauelement nach einem der vorhergehenden Ansprüche, wobei der frische Schaum des Sandwich-Bauelements eine Wärmeleitfähigkeit im Bereich von 16 bis 30 mW/m·K, insbesondere 22 bis 28 mW/m·K aufweist, gemessen gemäß der Beschreibung.

6. Verfahren zur Herstellung von Sandwich-Bauelementen aus mindestens zwei voneinander beabstandeten Baustoffplatten mit einem Polyurethan-Schaumkern, umfassend folgende Schritte

   A) Vermischen von (a) mindestens einer Polyisocyanatkomponente, (b) mindestens einer Komponente, die mindestens eine mehrfunktionelle gegenüber Isocyanaten reaktive Verbindung umfasst, und (c) mindestens einem Treibmittel nach dem Hochdruckinjektionsverfahren; und
   B) Einbringen des erhaltenen Gemisches in einen Hohlraum zwischen den beabstandeten Baustoffplatten, wobei die Verdichtung des Schaums im Bereich von 1,1 bis 2,5 liegt, wobei die Verdichtung der Quotient aus der Dichte des Schaums im Hohlraum dividiert durch die Dichte des frei geschäumten Schaumkörpers ist.

7. Verfahren nach Anspruch 6, wobei das Vermischen der Komponenten (a) bis (c) in einer Mischkammer bei einem Druck von mindestens 100 bar, insbesondere bei einem Druck im Bereich von 100 bar bis 300 bar, erfolgt.

8. Verfahren nach Anspruch 6 oder 7, wobei man ein Treibmittel verwendet, das ausgewählt ist unter $C_3$-$C_5$-Alkanen, $C_4$-$C_6$-Cycloalkanen, Di- $C_1$-$C_4$-alkylethern, Ameisensäuremethylester, Ameisensäure, Aceton, Fluorkohlenwasserstoffen, teilhalogenierten Fluorolefinen, Fluorchlorkohlenwasserstoffen, Kohlendioxid, Wasser und Mischungen von zwei oder mehreren davon.

9. Verfahren nach einem der Ansprüche 6 bis 8, wobei in Schritt A) mindestens ein Katalysator für die Reaktion der Polyisocyanatkomponente mit der Polyolkomponente zugemischt wird.

10. Verfahren nach einem der Ansprüche 6 bis 9, wobei die Menge des in Schritt B) in den Hohlraum eingebrachten Gemisches so bemessen ist, dass die Gesamteinschussrohdichte weniger als 100 kg/m$^3$, insbesondere weniger als 80 kg/m$^3$, beträgt, wobei unter Gesamteinschussrohdichte die Gesamtmenge an eingefülltem Gemisch aus Schritt A), bezogen auf das Gesamtvolumen des auszuschäumenden Hohlraums, zu verstehen ist.

11. Verfahren nach einem der Ansprüche 6 bis 10, wobei die in Schritt B) in den Hohlraum eingebrachte Menge an Gemisch im Bereich von 0,1 bis 8 kg/s liegt.

**12.** Verfahren nach einem der Ansprüche 6 bis 11, wobei wenigstens eine der Baustoffplatten auf der dem Hohlraum zugewandten Seite wenigstens teilweise mit einem Primer versehen wird.

**13.** Verfahren nach Anspruch 12, wobei der Primer auf einem physikalisch abbindenden Bindemittel und/oder einem chemisch härtenden Bindemittel basiert.

**14.** Verfahren nach Anspruch 13, wobei der Primer auf einem Bindemittel basiert, das ausgewählt ist unter einem Epoxidharz, nachvernetzendenAcrylatdispersionen oder nachvernetzenden Alkydharzdispersionen.

**15.** Verfahren nach einem der Ansprüche 12 bis 14, wobei der Primer in einer Menge im Bereich von 20 bis 600 g/m$^2$ aufgetragen wird.

**16.** Verfahren nach einem der Ansprüche 6 bis 15, wobei die Baustoffplatten aus Beton, Geopolymeren oder Gips gefertigt sind.

**Claims**

**1.** A sandwich component composed of at least two building material plates which are arranged essentially parallel to one another at a distance from one another and have a polyurethane foam core between the spaced building material plates, wherein the ratio of the greatest measured compressive modulus of the polyurethane foam core in a direction oriented parallel to the building material plates to the compressive modulus of the polyurethane foam core in a direction oriented perpendicular to the building material plates is less than 1.7, wherein the compressive modulus is measured according to the description, and the foam core is obtainable by compaction of the foam in the range from 1.1 to 2.5, where the compaction is the ratio of the density of the foam in the hollow space divided by the density of the free-foamed foam body.

**2.** The sandwich component according to claim 1, wherein the core density of the polyurethane foam core is in the range from 20 to 100 kg/m$^3$.

**3.** The sandwich component according to claim 1 or 2, wherein at least one of the building material plates is provided at least partly with a primer on the side facing the polyurethane foam core.

**4.** The sandwich component according to any of the preceding claims, wherein the building material plates are made of concrete, geopolymers or gypsum plaster.

**5.** The sandwich component according to any of the preceding claims, wherein the fresh foam of the sandwich component has a thermal conductivity in the range from 16 to 30 mW/m·K, in particular from 22 to 28 mW/m·K, measured according to the description.

**6.** A process for producing sandwich components composed of at least two building material plates which are at a distance from one another and have a polyurethane foam core, comprising the following steps:

A) mixing of (a) at least one polyisocyanate component, (b) at least one component which comprises at least one polyfunctional compound which is reactive toward isocyanates and (c) at least one blowing agent by the high-pressure injection process; and
B) introduction of the mixture obtained into a hollow space between the spaced building material plates, where the compaction of the foam is in the range from 1.1 to 2.5, where the compaction is the ratio of the density of the foam in the hollow space divided by the density of the free-foamed foam body.

**7.** The process according to claim 6, wherein the mixing of the components (a) to (c) is carried out in a mixing chamber at a pressure of at least 100 bar, in particular at a pressure in the range from 100 bar to 300 bar.

**8.** The process according to claim 6 or 7, wherein a blowing agent selected from among $C_3$-$C_5$-alkanes, $C_4$-$C_6$-cyclo-alkanes, di-$C_1$-$C_4$-alkyl ethers, methyl formate, formic acid, acetone, fluorohydrocarbons, partially halogenated fluoroolefins, chlorofluorocarbons, carbon dioxide, water and mixtures of two or more thereof is used.

**9.** The process according to any of claims 6 to 8, wherein at least one catalyst for the reaction of the polyisocyanate component with the polyol component is added in step A).

10. The process according to any of claims 6 to 9, wherein the amount of the mixture introduced into the hollow space in step B) is such that the overall injected foam density is less than 100 kg/m3, in particular less than 80 kg/m$^3$, where the overall injected foam density is the total amount of mixture from step A) which is introduced divided by the total volume of the hollow space to be filled with foam.

11. The process according to any of claims 6 to 10, wherein the amount of mixture introduced into the hollow space in step B) is in the range from 0.1 to 8 kg/s.

12. The process according to any of claims 6 to 11, wherein at least one of the building material plates is provided at least partly with a primer on the side facing the hollow space.

13. The process according to claim 12, wherein the primer is based on a physically setting binder and/or a chemically curing binder.

14. The process according to claim 13, wherein the primer is based on a binder selected from among an epoxy resin, post-crosslinking acrylate dispersions or post-crosslinking alkyd resin dispersions.

15. The process according to any of claims 12 to 14, wherein the primer is applied in an amount in the range from 20 to 600 g/m$^2$.

16. The process according to any of claims 6 to 15, wherein the building material plates are made of concrete, geopolymers or gypsum plaster.

## Revendications

1. Élément sandwich constitué par au moins deux plaques de construction écartées l'une de l'autre, agencées de manière sensiblement parallèle l'un à l'autre présentant un noyau en mousse de polyuréthane entre les plaques de construction écartées, le rapport du module E en compression mesuré le plus élevé du noyau en mousse de polyuréthane dans une direction spatiale qui est orientée parallèlement aux plaques de construction au module E en compression du noyau en mousse de polyuréthane dans une direction spatiale qui est orientée perpendiculairement aux plaques de construction étant inférieur à 1,7, le module E en compression étant mesuré selon la description et le noyau en mousse pouvant être obtenu par densification de la mousse dans la plage de 1,1 à 2,5, la densification étant le quotient de la masse volumique de la mousse dans l'espace creux divisée par la masse volumique du corps en mousse moussé librement.

2. Élément sandwich selon la revendication 1, la masse volumique du noyau en mousse de polyuréthane étant située dans la plage de 20 à 100 kg/m$^3$.

3. Élément sandwich selon la revendication 1 ou 2, au moins l'une des plaques de construction étant pourvue au moins partiellement d'un apprêt sur le côté orienté vers le noyau en mousse de polyuréthane.

4. Élément sandwich selon l'une des revendications précédentes, les plaques de construction étant fabriquées en béton, en géopolymères ou en plâtre.

5. Élément sandwich selon l'une des revendications précédentes, la mousse fraîche de l'élément sandwich présentant une conductivité thermique dans la plage de 16 à 30 mW/m·K, en particulier de 22 à 28 mW/m·K, mesurée selon la description.

6. Procédé de fabrication de composants sandwich constitués par au moins deux plaques de construction écartées l'une de l'autre, présentant un noyau en mousse de polyuréthane, comprenant les étapes suivantes :

   A) mélange de (a) au moins un composant de polyisocyanate, (b) au moins un composant qui comprend au moins un composé polyfonctionnel, réactif vis-à-vis d'isocyanates et (c) au moins un agent gonflant selon le procédé d'injection sous haute pression ; et
   B) introduction du mélange obtenu dans un espace creux entre les plaques de construction écartées, la densification de la mousse étant située dans la plage de 1,1 à 2,5, la densification étant le quotient de la masse volumique de la mousse dans l'espace creux divisée par la masse volumique du corps en mousse moussé librement.

7. Procédé selon la revendication 6, le mélange des composants (a) à (c) ayant lieu dans une chambre de mélange à une pression d'au moins 100 bars, en particulier à une pression dans la plage de 100 bars à 300 bars.

8. Procédé selon la revendication 6 ou 7, un agent gonflant étant utilisé, lequel agent est choisi parmi les $C_3$-$C_5$-alcanes, les $C_4$-$C_6$-cycloalcanes, les di-$C_1$-$C_4$-alkyléthers, l'ester méthylique de l'acide formique, l'acide formique, l'acétone, les hydrocarbures fluorés, les fluorooléfines partiellement halogénées, les hydrocarbures fluorochlorés, le dioxyde de carbone, l'eau et les mélanges de deux ou plus de ceux-ci.

9. Procédé selon l'une des revendications 6 à 8, au moins un catalyseur pour la réaction du composant polyisocyanate avec le composant polyol étant introduit en mélangeant dans l'étape A).

10. Procédé selon l'une des revendications 6 à 9, la quantité du mélange introduit dans l'espace creux dans l'étape B) étant dimensionnée de telle sorte que la masse volumique brute d'intercalage totale est inférieure à 100 kg/m$^3$, en particulier inférieure à 80 kg/m$^3$, la masse volumique brute d'intercalage totale désignant la quantité totale de mélange introduit de l'étape A), par rapport au volume total de l'espace creux de moussage.

11. Procédé selon l'une des revendications 6 à 10, la quantité de mélange introduite dans l'espace creux dans l'étape B) étant située dans la plage de 0,1 à 8 kg/s.

12. Procédé selon l'une des revendications 6 à 11, au moins l'une des plaques de construction étant pourvue au moins partiellement d'un apprêt sur le côté orienté vers l'espace creux.

13. Procédé selon la revendication 12, l'apprêt étant à base d'un liant à prise physique et/ou d'un liant à durcissement chimique.

14. Procédé selon la revendication 13, l'apprêt étant à base d'un liant qui est choisi parmi une résine époxyde, les dispersions d'acrylate à réticulation ultérieure ou les dispersions de résine alkyde à réticulation ultérieure.

15. Procédé selon l'une des revendications 12 à 14, l'apprêt étant appliqué en une quantité dans la plage de 20 à 600 g/m$^2$.

16. Procédé selon l'une des revendications 6 à 15, les plaques de construction étant fabriquées en béton, en géopolymères ou en plâtre.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0015685 A
- WO 2009077490 A
- US 4349386 A
- WO 8503699 A
- US 4472199 A

**In der Beschreibung aufgeführte Nicht-Patentliteratur**

- *Bauingenieur,* vol. 88, 412-419
- *Composite Structures,* 2015, vol. 121, 271-279
- **ALI SHAMS et al.** *Composite Structures,* 2015, vol. 121, 271-279
- Polyurethane. Kunststoffhandbuch. Carl-Hanser-Verlag, 1993, vol. 7
- Polyurethane. Kunststoffhandbuch. Carl Hanser Verlag, 1966, vol. VII
- Polyurethane. Kunststoffhandbuch. Carl Hanser Verlag, 1993, vol. VII
- Ullmann's Encyclopedia of Industrial Chemistry. vol. A9, 547